# EUROPEAN PATENT SPECIFICATION

(11) **EP 3 249 269 B1**
(45) Date of publication and mention of the grant of the patent: **27.11.2019**
(21) Application number: 17172016.2
(22) Date of filing: 19.05.2017
(51) Int. Cl.: F16K 1/36, F16K 1/42, F16K 47/02, F16K 1/54

(54) **FLOW CONTROL VALVE**
STRÖMUNGSREGELVENTIL
VANNE DE RÉGULATION DE DÉBIT

(30) Priority: 23.05.2016 JP 2016102542
(43) Date of publication of application: 29.11.2017
(73) Proprietor: Fujikoki Corporation, Tokyo 158-0082 (JP)
(72) Inventor: INO, Yasutoshi, Tokyo, Tokyo 158-0082 (JP)
(74) Representative: Kordel, Mattias

(56) References cited:
- EP-A1- 3 171 058
- JP-A- 2004 340 260
- JP-A- 2012 047 213
- JP-A- 2012 082 896
- JP-A- 2013 234 726
- JP-A- 2015 143 543

## Description

### Technical Field

The present invention relates to a flow control valve having a valve body, which includes a valve chamber and a valve orifice, and a valve element for changing the flow rate of a fluid through the valve orifice in ²accordance with the lift amount of the valve element. In particular, the present invention relates to a flow control valve that is suited to control the flow rate of a refrigerant in a heat pump heating and cooling system and the like.

### Background Art

A linear flow characteristic and an equal percentage flow characteristic are well known as the relationships between the valve opening position (i.e., lift amount) and the flow rate, that is, the flow characteristics of a flow control valve. The linear flow characteristic refers to a characteristic that the rate of change in the flow rate relative to a change in the valve opening position is constant, while the equal percentage flow characteristic refers to a characteristic that the rate of change in the valve opening position is proportional to the flow rate.

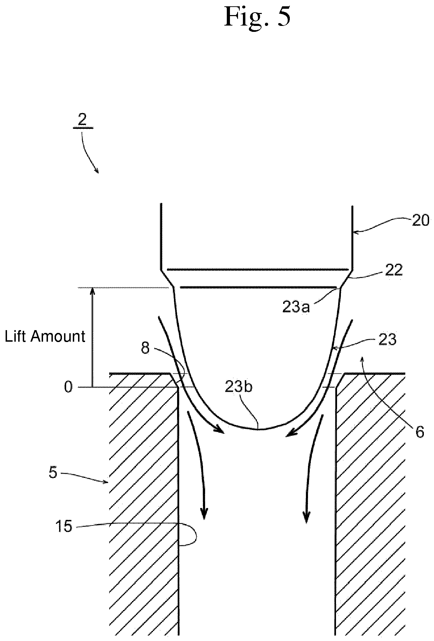

Fig. 5 shows the primary portion of an exemplary flow control valve that is adapted to obtain an equal percentage flow characteristic. A flow control valve 2 exemplarily shown in the drawing is used to control the flow rate of a refrigerant in a heat pump heating and cooling system and the like, and has a valve body 5, which includes a valve chamber 6, a valve seat 8 with an inverted truncated conical surface, and a valve orifice 15 with a cylindrical surface; and a valve element 20 for changing the flow rate of a fluid through the valve orifice 15 in accordance with the lift amount of the valve element 20 from the valve seat 8. The valve element 20 is adapted to move up or down so as to be in contact with or located away from the valve seat 8 by a screw-driving elevating or lowering mechanism that includes a valve stem provided with an external thread, a guide stem provided with an internal thread, a stepping motor, and the like as described in Patent Literature 1, for example.

The valve element 20 has a to-be-seated surface portion 22 adapted to be in contact with the valve seat 8 and a curved surface portion 23 that is continuous with the lower side of the to-be-seated surface portion 22 and is ellipsoidal spherical in shape to obtain an equal percentage flow characteristic as the flow characteristic. The curved surface portion 23 has a shape similar to the lower half of an egg, and the outer periphery thereof is curved such that the degree of curve (i.e., curvature) gradually becomes greater from an upper end 23a toward a lower end 23b thereof.

In such a flow control valve 2 adapted to obtain an equal percentage flow characteristic, when the flow direction of a refrigerant is the valve chamber 6 → the valve orifice 15 as indicated by the thick solid arrows in Fig. 5, the refrigerant flows along the curved surface portion 23. However, when the refrigerant flows through the valve orifice 15, a sudden fluctuation in the pressure or a refrigerant separation phenomenon is likely to occur, whereby a vortex or cavitation is likely to occur and grow, which is problematic in that relatively large noise is generated.

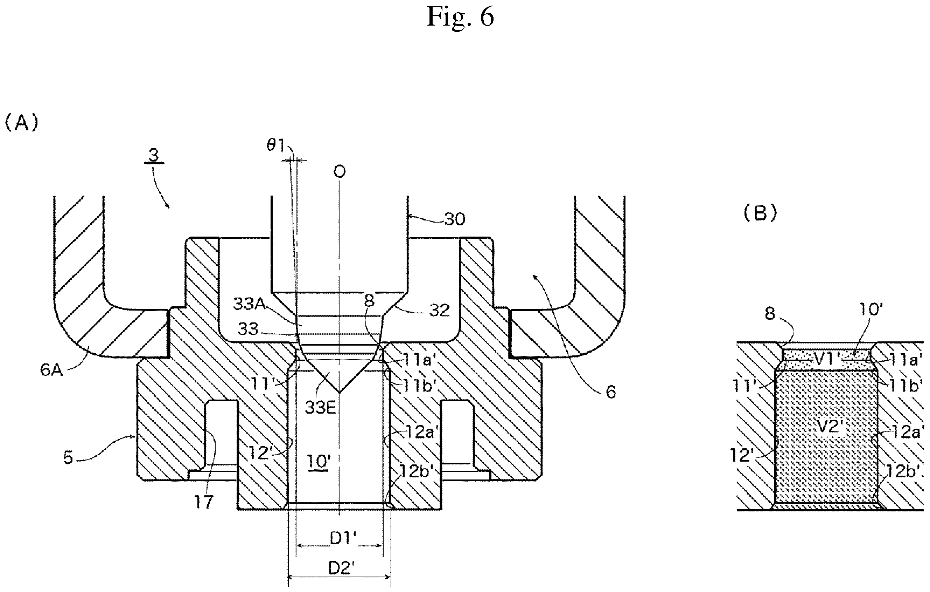

Providing the valve element 20 with the curved surface portion 23 that is ellipsoidal spherical in shape to obtain an equal percentage flow characteristic as described above is problematic in terms of the machining cost, cost-effectiveness, and the like. Thus, a flow control valve 3 that is adapted to obtain a characteristic close to an equal percentage flow characteristic, such as the one shown in Figs. 6, has been developed. The flow control valve 3 exemplarily shown in the drawing includes a valve body 5, which has a valve chamber forming member 6A fixedly attached thereto, and a valve element 30 for changing the flow rate of a fluid through a valve orifice 10' in accordance with the lift amount of the valve element 30 from a valve seat 8. The valve orifice 10' includes a first valve orifice portion 11' having a cylindrical portion 11a' with a diameter D1' and a truncated conical portion 11b' continuous with the cylindrical portion 11a', and a second valve orifice portion 12' having a cylindrical portion 12a' with a diameter D2' and a truncated conical portion 12b' continuous with the cylindrical portion 12a'. It should be noted that a connection portion 17 to which a pipe joint (not shown) is adapted to be connected is provided on the outer circumference of the bottom of the second valve orifice portion 12'.

The valve element 30 has a to-be-seated surface portion 32 adapted to be seated on the valve seat 8, and a curved surface portion 33 that is continuous with the lower side of the to-be-seated surface portion 32 to obtain a characteristic close to an equal percentage flow characteristic as the flow characteristic. The curved surface portion 33 has inverted truncated conical tapered surface portions 33A to 33E with a plurality of steps (herein, five steps) where the control angle of the curved surface portion 33 (i.e., angle crossing with a line parallel with the central axial line O of the valve element 30) is increased in stages toward the tip end of the curved surface portion 33 so as to simulate an ellipsoidal spherical surface. The first control angle θ1 of the uppermost tapered surface portion 33A is usually set at 3° < θ1 < 15° (herein, 5°), and the lowermost tapered surface portion 33E has a conical surface with a pointed end.

Meanwhile, Patent Literature 2 discloses a flow control valve that is adapted to obtain a typical linear flow characteristic and has a valve orifice designed to have specific dimensions and shape so as to suppress the generation of noise due to fluctuations in the pressure, a refrigerant separation phenomenon, and the like that may occur while the refrigerant flows through the valve orifice as described above.

Patent Literature 3 discloses a further flow control valve with a valve orifice shaped to suppress noise.

### Citation List

### Patent Literature

Patent Literature 1: JP 2012-172839 A
Patent Literature 2: JP 5696093 B
Patent Literature 3: JP 2015-143543 A

### Summary of Invention

### Technical Problem

However, in the flow control valve described in Patent Literature 2, as the length of the valve orifice should be set quite long, the pressure loss is increased, which is problematic in that an appropriate flow rate of a refrigerant is difficult to obtain. Further, as the dimensions and the shape of the valve orifice are designed to match a valve element with a linear flow characteristic, it is impossible to obtain a sufficient noise reducing effect when the flow control valve of Patent Literature 2 is applied to the aforementioned valve control valve with an equal percentage flow characteristic or a characteristic close thereto.

The present invention has been made in view of the foregoing, and it is an object of the present invention to provide a flow control valve that can effectively reduce the generation of noise due to fluctuations in the pressure or a refrigerant separation phenomenon that may occur while a refrigerant passes through a valve orifice, and also reduces the pressure loss and the like.

### Solution to Problem

In order to achieve the aforementioned object, a flow control valve in accordance with the present invention basically includes a valve body including a valve chamber and a valve orifice; and a valve element with a curved surface portion adapted to change a flow rate of a fluid through the valve orifice in accordance with a lift amount of the valve element, the curved surface portion having a curvature or a control angle that is increased continuously or in stages toward a tip end of the curved surface portion. An orifice diameter of the valve orifice is sequentially increased in four or more stages in a direction away from the valve chamber.

Further, a valve orifice length of a second valve orifice portion that is continuous with a first valve orifice portion located on a side of the valve chamber is longer than a valve orifice length of a third valve orifice portion that is continuous with the second valve orifice portion and a valve orifice length of a fourth valve orifice portion that is continuous with the third valve orifice portion.

A volume of the second valve orifice portion is preferably larger than a volume of the third valve orifice portion and a volume of the fourth valve orifice portion.

V2 > V4 > V3 > V1, where volumes of the first valve orifice portion, the second valve orifice portion, the third valve orifice portion, and the fourth valve orifice portion are V1, V2, V3, and V4, respectively.

Further, a volume ratio of the second valve orifice portion to the fourth valve orifice portion is (V2/V4) > 1.4, and a volume ratio of the second valve orifice portion to the third valve orifice portion is (V2/V3) > 1.6.

Each valve orifice portion that forms the valve orifice preferably includes a cylindrical portion and a truncated conical portion continuous with the cylindrical portion.

The curved surface portion of the valve element is preferably designed to obtain an equal percentage flow characteristic or a characteristic close thereto as a flow characteristic.

The curved surface portion of the valve element preferably has one of an ellipsoidal spherical portion, an inverted truncated conical tapered surface portion with a plurality of steps where a control angle is increased in stages toward the tip end of the curved surface portion, or a combination of the ellipsoidal spherical portion and the tapered surface portion with one or more steps.

### Advantageous Effects of Invention

In the flow control valve in accordance with the present invention, since the orifice diameter of the valve orifice is sequentially increased in four or more stages in a direction away from the valve chamber (D1 < D2 < D3 < D4), the pressure of a refrigerant is gradually restored as it passes through the valve orifice, and thus, fluctuations in the pressure are suppressed and rectification is achieved. In addition, since V2 > V4 > V3 > V1, and further, since the volume ratio (V2/V4) > 1.4 and the volume ratio (V2/V3) > 1.6, it is possible to surely suppress the generation and growth of a vortex or cavitation that may occur due to fluctuations in the pressure or a refrigerant separation phenomenon, and thus obtain an even smoother flow. Therefore, the noise level can be significantly suppressed in a flow control valve with an equal percentage flow characteristic or a characteristic close thereto.

Further, since the valve orifice portion is formed in four or more stages, and the orifice diameter is thus increased sequentially, the valve orifice length L2 of the second valve orifice portion (or the valve orifice length L1 of the first valve orifice portion) is shorter than that of the flow control valve described in Patent Literature 2 or the flow control valve with an equal percent flow characteristic shown in Fig. 5. Therefore, the pressure loss can be suppressed and an appropriate flow rate of a refrigerant can be obtained.

### Brief Description of Drawings

Fig. 1(A) is a cross-sectional view of a primary portion of an embodiment of a flow control valve in accordance with the present invention, and Fig. 1(B) is a view used to describe the valve orifice lengths and the volumes of valve orifice portions (formed in four stages) that form the valve orifice shown in Fig. 1(A).
Fig. 2 is a graph showing the relationship of the volumes of the valve orifice portions of the flow control valve shown in Figs. 1, and the volumes of the valve orifice portions of prototype valves #1 to #4 (12 types) and the conventional valve (prototype valve #5) prepared to set the range of the volume ratio and the like.
Figs. 3 are graphs showing the actually measured value of the noise level [dB] of each of the prototype valves #1 to #5 when the flow direction is the valve chamber → the valve orifice and the flow rate is low (Fig. 3(A)) or the flow rate is high (Fig. 3(B)).
Figs. 4 are graphs showing the actually measured value of the noise level [dB] of each of the prototype valves #1 to #5 when the flow direction is the valve orifice → the valve chamber and the flow rate is low (Fig. 4(A)) or the flow rate is high (Fig. 4(B)).
Fig. 5 is a partial cross-sectional view showing a primary portion of an exemplary flow control valve adapted to obtain an equal percentage flow characteristic.
Fig. 6(A) is a cross-sectional view of a primary portion of an exemplary flow control valve adapted to obtain a characteristic close to an equal percentage flow characteristic, and Fig. 6(B) is a view used to describe the volume of a two-stage valve orifice portion that forms the valve orifice shown in Fig. 6(A).

### Description of Embodiments

Hereinafter, embodiments of the present invention will be described with reference to the accompanying drawings.

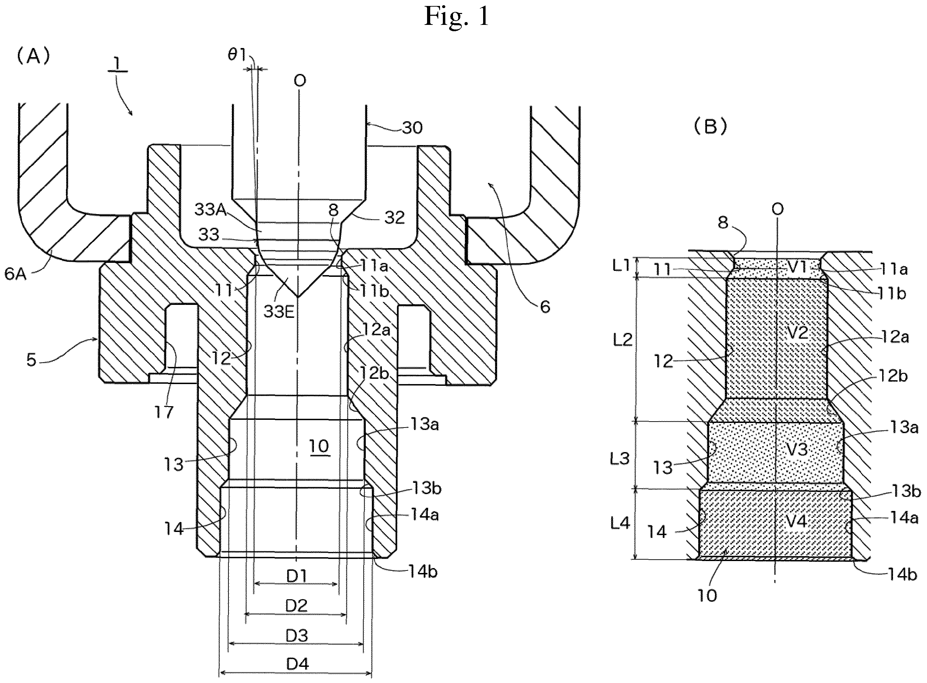

Fig. 1(A) is a cross-sectional view of a primary portion of an embodiment of a flow control valve in accordance with the present invention, and Fig. 1(B) is a view used to describe the valve orifice lengths and the volumes of valve orifice portions (formed in four stages) that form the valve orifice shown in Fig. 1(A). It should be noted that in Figs. 1, portions that correspond to those of the aforementioned conventional flow control valve 3 shown in Figs. 6 are denoted by the same reference numerals.

The flow control valve 1 shown in the embodiment is used to control the flow rate of a refrigerant in a heat pump heating and cooling system and the like, and is adapted to obtain a characteristic close to an equal percentage flow characteristic like the aforementioned conventional flow control valve 3 shown in Figs. 6. That is, the flow control valve 1 includes a valve body 5 having a valve chamber forming member 6A fixedly attached thereto and a valve orifice 10 (described in detail below) that opens into a valve chamber 6 and that is a characteristic portion of the present invention; and a valve element 30 for changing the flow rate of a fluid through the valve orifice 10 in accordance with the lift amount of the valve element 30 from a valve seat 8. The valve element 30 includes, like the conventional flow control valve 3 shown in Figs. 6, a to-be-seated surface portion 32 adapted to be seated on the valve seat 8, and a curved surface portion 33 that is continuous with the lower side of the to-be-seated surface portion 32 and adapted to obtain a characteristic close to an equal percentage flow characteristic as the flow characteristic. The curved surface portion 33 has inverted truncated conical tapered surface portions 33A to 33E with a plurality of steps (herein, five steps) such that the control angle of the curved surface portion 33 (i.e., angle crossing with a line parallel with the central axial line O of the valve element 30) is increased in stages toward the tip end of the curved surface portion 33 so as to simulate an ellipsoidal spherical surface. The first control angle θ1 of the uppermost tapered surface portion 33A is set at 3° < θ1 < 15° (herein, 5°), and the lowermost tapered surface portion 33E has a conical surface with a pointed end.

The orifice diameter of the valve orifice 10 is sequentially increased in four stages in a direction away from the valve chamber 6. That is, the valve orifice 10 includes, sequentially arranged from the valve chamber 6 side, a first valve orifice portion 11 having a cylindrical portion 11a with an orifice diameter D1 and a truncated conical portion 11b continuous with the cylindrical portion 11a; a second valve orifice portion 12 having a cylindrical portion 12a with an orifice diameter D2 and a truncated conical portion 12b continuous with the cylindrical portion 12a; a third valve orifice portion 13 having a cylindrical portion 13a with an orifice diameter D3 and a truncated conical portion 13b continuous with the cylindrical portion 13a; and a fourth valve orifice portion 14 having a cylindrical portion 14a with an orifice diameter D4 and a truncated conical portion 14b continuous with the cylindrical portion 14a. The orifice diameters of the valve orifice portions 11 to 14 satisfy D1 < D2 < D3 <D4.

In addition, as shown in Fig. 1(B), provided that the valve orifice lengths (lengths in the direction along the central axial line O) of the valve orifice portions 11, 12, 13, and 14 are L1, L2, L3, and L4, respectively, L2 is longer than L3 and L4.

Further, provided that the volumes of the first valve orifice portion 11, the second valve orifice portion 12, the third valve orifice portion 13, and the fourth valve orifice portion 14 are V1, V2, V3, and V4, respectively, V2 is larger than V3 and V4. More specifically, V2 > V4 > V3 > V1. Further specifically, the volume ratio of the second valve orifice portion 12 to the fourth valve orifice portion 14 is (V2/V4) > 1.4, and the volume ratio of the second valve orifice portion 12 to the third valve orifice portion 13 is (V2/V3) > 1.6.

It should be noted that a connection portion 17 to which a pipe joint (not shown) is adapted to be connected is provided on the outer circumference of the valve orifice 10.

The settings and the like of the aforementioned volume relationship (V2 > V4 > V3 > VI) and the ranges of the volume ratios (V2/V4) and (V2/V3) were derived by prototyping a number of flow control valves 1 whose valve orifice portions 11 to 14 have varied orifice diameters D1 to D4, varied valve orifice lengths L1 to L4, varied volumes V1 to V4, varied volume ratio, and the like, measuring the noise levels of them (prototype valves), and considering the measurement results. These are specifically described below in detail.

### [Configurations of prototype valves]

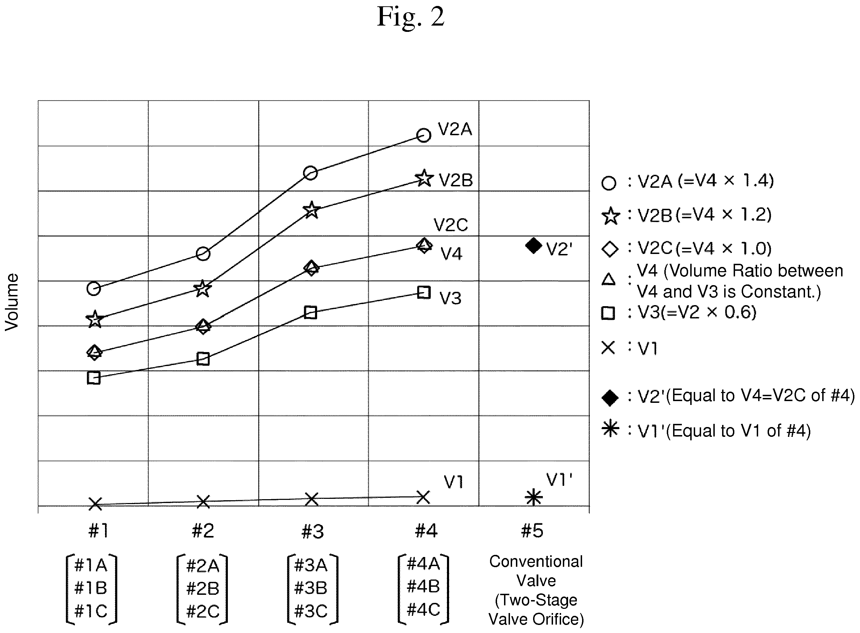

Herein, as shown in Fig. 2, of a number of prototype valves, four sets (#1, #2, #3, and #4) of prototype valves whose volumes V2 of the second valve orifice portions 12 come in three types (V2A, V2B, V2C) (that is, a total of 12 types) are used as representative examples. In addition, the flow control valve 3 with a conventional two-stage valve orifice shown in Figs. 6 (referred to as a "conventional valve") is selected as a prototype valve #5.

Of the aforementioned three types of V2, V2A is 1.4 times as high as V4 of each of the prototype valves #1, #2, #3, and #4 (V2A = V4 × 1.4), and prototype valves whose V2 are V2A are indicated by #1A, #2A, #3A, and #4A. Of the three types of V2, V2B is 1.2 times as high as V4 of each of the prototype valves #1, #2, #3, and #4 (V2B = V4 × 1.2), and prototype valves whose V2 are V2B are indicated by #1B, #2B, #3B, and #4B. Of the three types of V2, V2C is 1.0 times as high as V4 of each of the prototype valves #1, #2, #3, and #4 (V2C = V4 × 1.0). That is, V2C = V4. Prototype valves whose V2 are V2C are indicated by #1C, #2C, #3C, #4C.

The volumes V1, V2 (V2A, V2B, V2C), V3, and V4 of the valve orifice portions 11 to 14, respectively, of each of the prototype valves #1 (#1A, #1B, #1C), #2 (#2A, #2B, #2C), #3(#3A, #3B, #3C), and #4(#4A, #4B, #4C) satisfy #1 < #2 < #3 < #4.

In addition, the volume ratio between V4 and V3 of each of the prototype valves #1, #2, #3, and #4 is constant (in the range of V4 > V3), and V3 of each of the prototype valves #1, #2, #3, and #4 is 0.6 times as high as V2 (V3 = V2 × 0.6), and is constant.

The volume V1' of the first valve orifice portion 11' of the conventional valve #5 is equal to V1 of the prototype valve #4, and the volume V2' of the second valve orifice portion 12' is equal to V4 of the prototype valve #4 (= V2C).

It should be noted that a specific dimension of the orifice diameter D1 of the first valve orifice portion 11 of each of the prototype valves #1 to #4 is as follows; D1 of #1: 1.3 mm, D1 of #2: 1.5 mm, D1 of #3: 2.0 mm, and D1 of #4: 2.2 mm. In addition, specific dimensions of the orifice diameters D1 to D4 of the valve orifice portions 11 to 14, respectively, of the prototype valve #1A are as follows; D1: 1.3 mm, D2: 3.1 mm, D3: 4.2 mm, and D4: 4.7 mm.

### [Measurement results of noise levels of prototype valves]

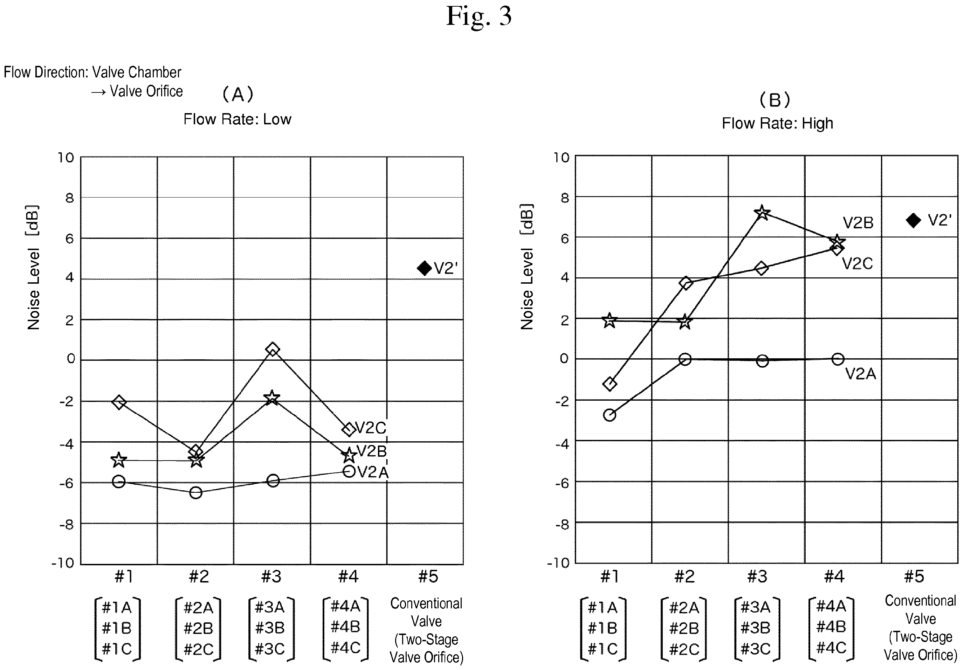

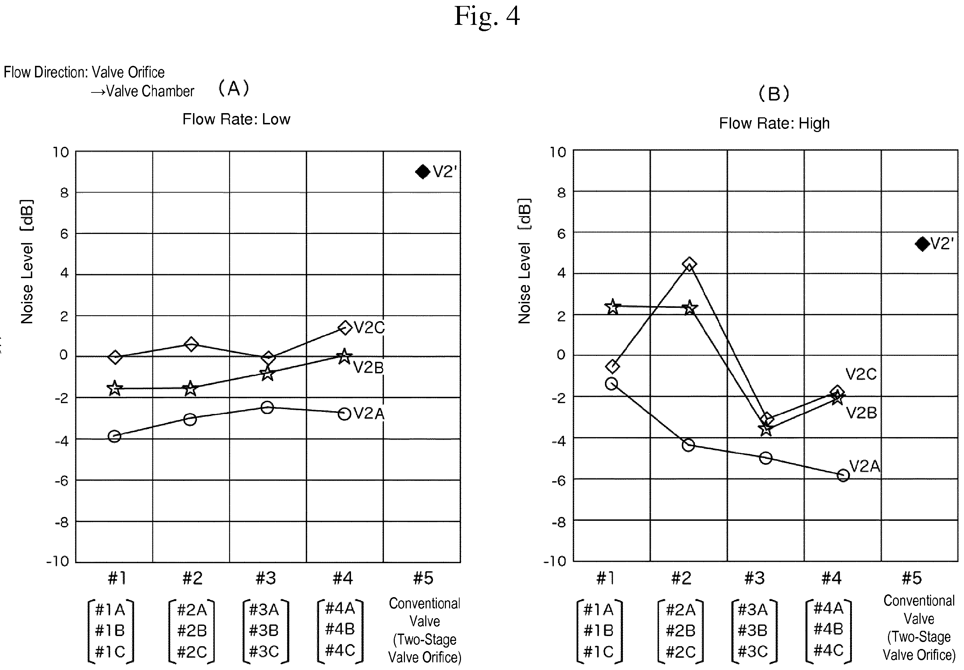

Figs. 3 and 4 show the measurement results of the noise levels of the aforementioned prototype valves #1, #2, #3, and #4, and #5 (conventional valve). Figs. 3 show the difference between the actually measured value of the noise level of each of the prototype valves #1, #2, #3, #4, and #5 and a required value to be satisfied when the flow direction is the valve chamber 6 → the valve orifice 10 and the flow rate is low (Fig. 3(A)) or the flow rate is high (Fig. 3(B)). Figs. 4 show the difference between the actually measured value of the noise level of each of the prototype valves #1, #2, #3, #4, and #5 and a required value to be satisfied when the flow direction is the valve orifice 10 → the valve chamber 6 and the flow rate is low (Fig. 4(A)) or the flow rate is high (Fig. 4(B)). The graphs show that the greater the negative value (the smaller the value from the level 0), the lower the noise level.

The graphs in Figs. 3(A) and 3(B) and Figs. 4(A) and 4(B) can confirm that the noise levels of the four sets (12 types) of the prototype valves #1, #2, #3, #4, each having valve orifice portions 11 to 14 (formed in four stages) with orifice diameters satisfying D1 < D2 < D3 < D4, are lower than the noise level of the conventional valve #5 with a two-stage valve orifice regardless of the flow direction or the flow rate (in particular, when the flow rate is low).

In addition, the graphs in Fig. 3(A) and Fig. 4(A) can also confirm that both in the case where the flow direction is the valve chamber 6 → the valve orifice 10 and the flow rate is low and the case where the flow direction is the valve orifice 10 → the valve chamber 6 and the flow rate is low, the noise level is the lowest when V2 is V2A (V4 × 1.4) (for example, the noise level is lower than the required value by about 6 dB when the flow direction is the valve chamber 6 → the valve orifice 10), and the noise level is the second lowest when V2 is V2B (V4 × 1.2) (for example, the noise level is lower than the required value by about 2 to 4 dB when the flow direction is the valve chamber 6 → the valve orifice 10), and further, the required value of the noise level can be satisfied when V2 is V2A and V2B. It is also found that when V2 is V2C (= V4), there may be cases where the required value of the noise level cannot be satisfied.

Meanwhile, the graphs in Fig. 3(B) and Fig. 4(B) can confirm that both in the case where the flow direction is the valve chamber 6 → the valve orifice 10 and the flow rate is high and the case where the flow direction is the valve orifice 10 → the valve chamber 6 and the flow rate is high, the noise level is the lowest when V2 is V2A (V4 × 1.4), and in such a case, the required value of the noise level can be satisfied. It is also found that that when V2 is V2B (V4 × 1.2) and V2C (= V4), there may be cases where the required value of the noise level cannot be satisfied.

When the aforementioned measurement results are considered, it is found that there is a tendency that under the condition that V4 is set larger than V3 in each of the prototype valves #1, #2, #3, and #4, the noise level becomes lower as V2 is set larger than V4. Based on such consideration, in the flow control valve 1 in this embodiment, V2 is set larger than V3 and V4, and more specifically, V2 > V4 > V3 > V1, and further specifically, the volume ratio (V2/V4) > 1.4 and the volume ratio (V2/V3) > 1.6 as described above.

### [Operation and effects]

In the flow control valve 1 of this embodiment with the aforementioned configuration, since the orifice diameter of the valve orifice 10 is sequentially increased in four stages in a direction away from the valve chamber 6 (D1 < D2 < D3 < D4), the pressure of a refrigerant is gradually restored as it passes through the valve orifice, and thus, fluctuations in the pressure are suppressed and rectification is achieved. In addition, since V2 > V4 > V3 > V1, and further, since the volume ratio (V2/V4) > 1.4 and the volume ratio (V2/V3) > 1.6, it is possible to surely suppress the generation and growth of a vortex or cavitation that may occur due to fluctuations in the pressure or a refrigerant separation phenomenon, and thus obtain an even smoother flow. Therefore, as can be seen from the measurement results of the noise levels of the aforementioned prototype valves #1, #2, #3, and #4, the noise level can be significantly suppressed in a flow control valve with an equal percentage flow characteristic or a characteristic close thereto.

Further, since the valve orifice portion is formed in four stages, and the orifice diameter is thus increased sequentially, the valve orifice length L2 of the second valve orifice portion 12 (or the valve orifice length L1 of the first valve orifice portion 11) is shorter than that of the flow control valve described in Patent Literature 2 or the flow control valve 2 with an equal percent flow characteristic shown in Fig. 5. Therefore, the pressure loss can be suppressed and an appropriate flow rate of a refrigerant can be obtained.

Herein, the flow control valve 1 in this embodiment has a high noise reducing effect when the flow rate is low, in particular, as can be seen from the measurement results of the noise levels of the aforementioned prototype valves #1, #2, #3, and #4. This means that in the case where the flow control valve 1 in this embodiment is used to control the flow rate of a refrigerant in a heating and cooling system, operating noise can be significantly suppressed than that of the conventional valve when a night mode is selected (in sleeping) in which the valve is operated at a low flow rate, and thus, the flow control valve 1 is considered to be quite advantageous.

Although the aforementioned embodiment illustrates a case where the present invention is applied to the flow control valve 1 with a characteristic close to an equal percentage flow characteristic, the present invention is not limited thereto, and can also be applied to the flow control valve 2 with an equal percentage flow characteristic such as the one shown in Fig. 5 as well as the flow control valve with a linear flow characteristic described in Patent Literature 1, 2, or the like.

In addition, although the curved surface portion of the valve element in the aforementioned embodiment has an inverted truncated conical tapered surface portion with a plurality of steps where the control angle is increased in stages toward the tip end of the curved surface portion, the present invention is not limited thereto, and it is also possible to provide an ellipsoidal spherical surface portion such as the one shown in Fig. 5 or a configuration in which the lower end portion of the ellipsoidal spherical surface portion (i.e., ellipsoidal spherical crown portion) is removed. Further, the curved surface portion may also be formed by a combination of the ellipsoidal spherical surface portion and the inverted truncated conical tapered surface portion with one or more steps and the like.

Further, although the valve orifice is formed in four stages in the aforementioned embodiment, it is needless to mention that the valve orifice may be formed in five or more stages.

### Reference Signs List

- 1: Flow control valve
- 5: Valve body
- 6: Valve chamber
- 10: Valve orifice
- 11: First valve orifice portion
- 12: Second valve orifice portion
- 13: Third valve orifice portion
- 14: Fourth valve orifice portion
- 30: Valve element
- 33: Curved surface portion
- D1: Diameter of first valve orifice
- D2: Diameter of second valve orifice
- D3: Diameter of third valve orifice
- D4: Diameter of fourth valve orifice
- L1: Valve orifice length of first valve orifice portion
- L2: Valve orifice length of second valve orifice portion
- L3: Valve orifice length of third valve orifice portion
- L4: Valve orifice length of fourth valve orifice portion
- V1: Volume of first valve orifice portion
- L2: Volume of second valve orifice portion
- L3: Volume of third valve orifice portion
- L4: Volume of fourth valve orifice portion
- #1, #2, #3, #4: Prototype valves

## Claims

1. A flow control valve (1) comprising:
a valve body (5) including a valve chamber (6) and a valve orifice (10); and
a valve element (30) with a curved surface portion (33) adapted to change a flow rate of a fluid through the valve orifice (10) in accordance with a lift amount of the valve element (30), the curved surface portion (33) having a curvature or a control angle that is increased continuously or in stages toward a tip end of the curved surface portion (33), wherein
an orifice diameter of the valve orifice (10) is sequentially increased in four or more stages in a direction away from the valve chamber (6), wherein
a valve orifice length (L2) of a second valve orifice portion (12) that is continuous with a first valve orifice portion (11) located on a side of the valve chamber (6) is longer than a valve orifice length (L3) of a third valve orifice portion (13) that is continuous with the second valve orifice portion (12) and a valve orifice length (L4) of a fourth valve orifice portion (14) that is continuous with the third valve orifice portion (13), wherein
provided that a volume of the first valve orifice portion (11) is V1, a volume of the second valve orifice portion (12) is V2, a volume of the third valve orifice portion (13) is V3, and a volume of the fourth valve orifice portion (14) is V4, V2 > V4 > V3 > V1, **characterized in that**
each valve orifice portion (11,12,13,14) has a cylindrical portion, and **in that**
a volume ratio of the second valve orifice portion (12) to the fourth valve orifice portion (14) is (V2/V4) > 1.4, and a volume ratio of the second valve orifice portion (12) to the third valve orifice portion (13) is (V2/V3) > 1.6.

2. The flow control valve (1) according to claim 1, wherein the volume of the second valve orifice portion (12) is larger than the volume of the third valve orifice portion (13) and the volume of the fourth valve orifice portion (14).

3. The flow control valve (1) according to claim 1 or 2, wherein each valve orifice portion (11,12,13,14) that forms the valve orifice (10) includes a cylindrical portion and a truncated conical portion continuous with the cylindrical portion.

4. The flow control valve (1) according to any one of claims 1 to 3, wherein the curved surface portion (33) of the valve element (30) is designed to obtain an equal percentage flow characteristic or a characteristic close thereto as a flow characteristic.

5. The flow control valve (1) according to claim 4, wherein the curved surface portion (33) of the valve element (30) has one of an ellipsoidal spherical portion, an inverted truncated conical tapered surface portion with a plurality of steps where a control angle is increased in stages toward the tip end of the curved surface portion (33), or a combination of the ellipsoidal spherical portion and the tapered surface portion with one or more steps.

## Patentansprüche

1. Strömungsregelventil (1), umfassend:
einen Ventilkörper (5) mit einer Ventilkammer (6) und einer Ventilöffnung (10); und
ein Ventilelement (30) mit einem gekrümmten Oberflächenabschnitt (33), der angepasst ist, um eine Strömungsrate eines Fluids durch die Ventilöffnung (10) gemäß einem Hubbetrag des Ventilelements (30) zu ändern, wobei der gekrümmte Oberflächenabschnitt (33) eine Krümmung oder einen Steuerwinkel aufweist, der kontinuierlich oder in Stufen zu einem Spitzenende des gekrümmten Oberflächenabschnitts (33) hin vergrößert ist, wobei
ein Öffhungsdurchmesser der Ventilöffnung (10) nacheinander in vier oder mehr Stufen in eine von der Ventilkammer (6) abgewandte Richtung erhöht ist, wobei
eine Ventilöffhungslänge (L2) eines zweiten Ventilöffnungsabschnitts (12), der mit einem ersten Ventilöffnungsabschnitt (11), der sich auf einer Seite der Ventilkammer (6) befindet, kontinuierlich ist, länger ist als eine Ventilöffhungslänge (L3) eines dritten Ventilöffnungsabschnitts (13), der mit dem zweiten Ventilöffnungsabschnitt (12) kontinuierlich ist, und eine Ventilöffhungslänge (L4) eines vierten Ventilöffnungsabschnitts (14), der mit dem dritten Ventilöffnungsabschnitt (13) kontinuierlich ist, wobei
mit der Maßgabe, dass ein Volumen des ersten Ventilöffnungsabschnitts (11) V1 ist, ein Volumen des zweiten Ventilöffnungsabschnitts (12) V2 ist, ein Volumen des dritten Ventilöffnungsabschnitts (13) V3 ist und ein Volumen des vierten Ventilöffnungsabschnitts (14) V4 ist, V2 > V4 > V3 > V1 ist, **dadurch gekennzeichnet, dass**
jeder Ventilöffnungsabschnitt (11, 12, 13, 14) einen zylindrischen Abschnitt aufweist, und dass
ein Volumenverhältnis des zweiten Ventilöffnungsabschnitts (12) zum vierten Ventilöffnungsabschnitt (14) > 1,4 ist (V2/V4), und ein Volumenverhältnis des zweiten Ventilöffiiungsabschnitts (12) zum dritten Ventilöffnungsabschnitt (13) > 1,6 ist (V2/V3).

2. Strömungsregelventil (1) nach Anspruch 1, wobei das Volumen des zweiten Ventilöffiiungsabschnitts (12) größer ist als das Volumen des dritten Ventilöffiiungsabschnitts (13) und das Volumen des vierten Ventilöffiiungsabschnitts (14).

3. Strömungsregelventil (1) nach Anspruch 1 oder 2, wobei jeder Ventilöffiiungsabschnitt (11, 12, 13, 14), der die Ventilöffnung (10) bildet, einen zylindrischen Abschnitt und einen kegelstumpfförmigen Abschnitt aufweist, der mit dem zylindrischen Abschnitt kontinuierlich ist.

4. Strömungsregelventil (1) nach einem der Ansprüche 1 bis 3, wobei der gekrümmte Oberflächenabschnitt (33) des Ventilelements (30) ausgebildet ist, um eine gleichprozentige Strömungscharakteristik oder eine ihr nahekommende Charakteristik als Strömungscharakteristik zu erhalten.

5. Strömungsregelventil (1) nach Anspruch 4, wobei der gekrümmte Oberflächenabschnitt (33) des Ventilelements (30) einen ellipsoiden kugelförmigen Abschnitt, einen invertierten kegelstumpfförmigen sich verjüngenden Oberflächenabschnitt mit einer Vielzahl von Schritten, wobei ein Steuerwinkel in Stufen zum Spitzenende des gekrümmten Oberflächenabschnitts (33) hin vergrößert ist, oder eine Kombination des ellipsoiden kugelförmigen Abschnitts und des sich verjüngenden Oberflächenabschnitts mit einem oder mehreren Schritten aufweist.

## Revendications

1. Soupape de régulation de débit (1) comprenant :
un corps de soupape (5) comprenant une chambre de soupape (6) et un orifice de soupape (10) ; et
un élément de soupape (30) avec une partie de surface incurvée (33) adaptée pour modifier un débit d'un fluide à travers l'orifice de soupape (10) en fonction d'une quantité de levage de l'élément de soupape (30), la partie de surface incurvée (33) ayant une courbure ou un angle de commande qui est augmenté continuellement ou par étapes vers une extrémité de pointe de la partie de surface incurvée (33), où
un diamètre d'orifice de l'orifice de soupape (10) est augmenté séquentiellement en quatre étapes ou plus dans une direction éloignée de la chambre de soupape (6), où
une longueur d'orifice de soupape (L2) d'une deuxième partie d'orifice de soupape (12) qui est continue avec une première partie d'orifice de soupape (11) située sur un côté de la chambre de soupape (6) est plus longue qu'une longueur d'orifice de soupape (L3) d'une troisième partie d'orifice de soupape (13) qui est continue avec la deuxième partie d'orifice de soupape (12) et une longueur d'orifice de soupape (L4) d'une quatrième partie d'orifice de soupape (14) qui est continue avec la troisième partie d'orifice de soupape (13), où
à condition qu'un volume de la première partie d'orifice de soupape (11) soit V1, un volume de la deuxième partie d'orifice de soupape (12) soit V2, un volume de la troisième partie d'orifice de soupape (13) soit V3, et un volume de la quatrième partie d'orifice de soupape (14) soit V4, V2 > V4 > V3 > V1, **caractérisé en ce que**
chaque partie d'orifice de soupape (11, 12, 13, 14) a une partie cylindrique, et **en ce que**
un rapport volumique de la deuxième partie d'orifice de soupape (12) à la quatrième partie d'orifice de soupape (14) est (V2/V4) > 1,4, et un rapport volumique de la deuxième partie d'orifice de soupape (12) à la troisième partie d'orifice de soupape (13) est (V2/V3) > 1,6.

2. Soupape de régulation de débit (1) selon la revendication 1, dans laquelle le volume de la deuxième partie d'orifice de soupape (12) est supérieur au volume de la troisième partie d'orifice de soupape (13) et au volume de la quatrième partie d'orifice de soupape (14).

3. Soupape de régulation de débit (1) selon la revendication 1 ou 2, dans laquelle chaque partie d'orifice de soupape (11, 12, 13, 14) qui forme l'orifice de soupape (10) comprend une partie cylindrique et une partie tronconique conique continue avec la partie cylindrique.

4. Soupape de régulation de débit (1) selon l'une quelconque des revendications 1 à 3, dans laquelle la partie de surface courbe (33) de l'élément de soupape (30) est conçue pour obtenir une caractéristique de débit à pourcentage égal ou une caractéristique proche de celle-ci comme caractéristique de débit.

5. Soupape de régulation de débit (1) selon la revendication 4, dans laquelle la partie de surface incurvée (33) de l'élément de soupape (30) présente l'une parmi une partie sphérique ellipsoïdale, une partie de surface conique tronconique inversée avec une pluralité d'étapes où un angle de régulation est augmenté par étapes vers l'extrémité frontale de la partie de surface incurvée (33) ou une combinaison de la partie de sphère ellipsoïdale et de la partie de surface conique avec un ou plusieurs étapes.
